# FASCICULE DE BREVET EUROPEEN

(11) **EP 3 350 074 B1**
(45) Date de publication et mention de la délivrance du brevet: **30.10.2019**
(21) Numéro de dépôt: 16769925.5
(22) Date de dépôt: 15.09.2016
(51) Int. Cl.: B64C 13/28, F16D 67/00

(54) **DISPOSITIF DE TRANSMISSION A LIMITATION DE COUPLE**
GETRIEBE MIT DREHMOMENTBEGRENZER
TRANSMISSION WITH TORQUE LIMITER

(30) Priorité: 15.09.2015 FR 1558598
(43) Date de publication de la demande: 25.07.2018
(73) Titulaire: Safran Electronics & Defense, 92100 Boulogne-Billancourt (FR)
(72) Inventeur: MENIO, Stéphane, 92100 Boulogne-Billancourt (FR)
(74) Mandataire: Regimbeau
(86) Numéro de dépôt international: PCT/EP2016/071751
(87) Numéro de publication internationale: WO 2017/046195

(56) Documents cités:
- EP-A2- 0 727 594
- FR-A5- 2 074 860
- US-A- 3 552 147

## Description

### DOMAINE DE L'INVENTION

L'invention concerne un dispositif de transmission à limitation de couple.

### ETAT DE LA TECHNIQUE

Les aéronefs comprennent généralement des dispositifs hypersustentateurs permettent de modifier les profils des ailes afin d'augmenter leur portance lors des phases de décollage et d'atterrissage dans lesquelles l'aéronef évolue à basse vitesse.

Ces dispositifs hypersustentateurs comprennent des volets agencés sur les ailes au niveau des bords d'attaque et de fuite, qui agissent sur la courbure de l'aile ou la surface alaire.

Les systèmes de commande des volets comprennent généralement un moteur électrique ou hydraulique, une transmission d'effort par arbre de torsion et des vérins à vis.

En position déployée, ces volets doivent être synchronisés entre eux afin d'éviter tout évènement catastrophique.

Afin de limiter la dissymétrie de position entre les volets, une solution consiste à prévoir un dispositif de recopie de position conçu pour détecter les positions respectives des volets et bloquer les volets dès qu'un écart de position supérieur à un seuil prédéterminé est détecté entre les volets.

Une autre solution possible consisterait à prévoir un dispositif limiteur de couple conçu pour bloquer les volets en position dès qu'un couple de torsion supérieur à un seuil prédéterminé s'exerce sur l'arbre de torsion. Document US 3 552 147 montre un tel dispositif selon l'état de la technique.

Un inconvénient toutefois des dispositifs limiteurs de couple connus est qu'ils ne permettent généralement pas de procurer à la fois un blocage efficace en cas de dépassement du couple seuil, tout en garantissant un déblocage dès que le couple de torsion redevient inférieur au couple seuil.

### RESUME DE L'INVENTION

Un but de l'invention est de proposer un dispositif de transmission qui permet à la fois d'assurer un blocage efficace, tout en étant réversible.

Ce but est atteint dans le cadre de la présente invention grâce à un dispositif de transmission, comprenant :
- un carter,
- un arbre d'entrée monté rotatif par rapport au carter,
- un arbre de sortie monté rotatif par rapport au carter,
- un frein entre le carter et l'arbre de sortie, le frein étant mobile entre une configuration desserrée dans laquelle le frein autorise la rotation de l'arbre de sortie par rapport au carter et une configuration serrée dans laquelle le frein empêche la rotation de l'arbre de sortie par rapport au carter,
- un premier ensemble d'accouplement comprenant une première pièce d'entrée solidaire en rotation de l'arbre d'entrée, une première pièce de sortie solidaire en rotation de l'arbre de sortie, et un premier mécanisme d'accouplement entre la première pièce d'entrée et la première pièce de sortie, le premier mécanisme d'accouplement étant configuré pour déplacer la première pièce d'entrée par rapport à la première pièce de sortie entre une première position d'accouplement lorsque le couple transmis entre la première pièce d'entrée et la première pièce de sortie est inférieur à un premier seuil, et une deuxième position d'accouplement lorsque le couple transmis est supérieur au premier seuil,
- un deuxième ensemble d'accouplement comprenant une deuxième pièce d'entrée solidaire en rotation de la première pièce d'entrée et une deuxième pièce de sortie solidaire en rotation de l'arbre de sortie, et un deuxième mécanisme d'accouplement entre la deuxième pièce d'entrée et la deuxième pièce de sortie, le deuxième mécanisme d'accouplement étant configuré déplacer la deuxième pièce d'entrée par rapport à la deuxième pièce de sortie entre une première position d'accouplement lorsque le couple transmis entre la deuxième pièce d'entrée et la deuxième pièce de sortie est inférieur à un deuxième seuil, le deuxième seuil étant inférieur au premier seuil, et une deuxième position lorsque le couple transmis est supérieur au deuxième seuil,
   dans lequel le déplacement de la deuxième pièce d'entrée par rapport à la deuxième pièce de sortie vers la deuxième position provoque un déplacement du frein vers la configuration serrée.

Dans un tel dispositif, le premier ensemble d'accouplement et le deuxième ensemble d'accouplement peuvent être conçus de sorte que le deuxième ensemble d'accouplement présente un deuxième seuil très inférieur, voire négligeable, par rapport au premier seuil du premier ensemble d'accouplement.

Ainsi, c'est le premier ensemble d'accouplement qui assure la limitation du couple transmis de l'arbre d'entrée à l'arbre de sortie, lorsque le couple d'entrée s'exerçant sur l'arbre d'entrée devient supérieur au premier seuil.

Cependant, le déplacement du frein est commandé par le deuxième ensemble d'accouplement, dont le deuxième seuil est faible, de sorte que si le couple d'entrée continue d'augmenter, la quasi-totalité de cette augmentation est utilisée pour le serrage du frein.

De cette manière, le frein est déplacé vers la configuration serrée de manière fiable.

En outre, le dispositif proposé est réversible. En effet, dès que le couple d'entrée redevient inférieur au premier seuil, le deuxième ensemble d'accouplement commande le desserrage du frein.

Le dispositif de transmission proposé peut en outre présenter les caractéristiques suivantes :
- le dispositif comprend une pièce intermédiaire par laquelle la deuxième pièce d'entrée est raccordée à la première pièce d'entrée,
- la première pièce d'entrée est mobile en translation par rapport à la première pièce de sortie entre la première position et la deuxième position,
- la deuxième pièce d'entrée est mobile en translation par rapport à la deuxième pièce de sortie entre la première position et la deuxième position,
- le premier mécanisme d'accouplement comprend un premier organe élastique de rappel propre à solliciter la première pièce d'entrée vers première position,
- le deuxième mécanisme d'accouplement comprend un deuxième organe élastique de rappel propre à solliciter la deuxième pièce d'entrée vers première position,
- le premier organe élastique de rappel présente une première raideur et le deuxième organe élastique de rappel présente une deuxième raideur, inférieure à la première raideur,
- la première pièce d'entrée et/ou la première pièce de sortie comprennent une première rampe propre à convertir une rotation de la première pièce d'entrée par rapport à la première pièce de sortie en une translation de la première pièce d'entrée par rapport à la première pièce de sortie entre la première position et la deuxième position,
- la deuxième pièce d'entrée et/ou la deuxième pièce de sortie comprennent une deuxième rampe propre à convertir une rotation de la deuxième pièce d'entrée par rapport à la deuxième pièce de sortie en une translation de la deuxième pièce d'entrée par rapport à la deuxième pièce de sortie entre la première position et la deuxième position,
- la première rampe présente un premier angle d'inclinaison par rapport à un plan normal à l'axe de rotation de l'arbre de sortie, et la deuxième rampe présente un deuxième angle d'inclinaison par rapport au plan normal à l'axe de rotation, le deuxième angle d'inclinaison étant inférieur au premier angle d'inclinaison,
- le premier mécanisme d'accouplement comprend des premières billes interposées entre la première pièce de sortie et la première pièce d'entrée,
- le deuxième ensemble d'accouplement comprend des deuxièmes billes interposées entre la deuxième pièce de sortie et la deuxième pièce d'entrée,
- le frein comprend un premier disque monté fixe en rotation par rapport au carter et un deuxième disque monté fixe en rotation par rapport à l'arbre de sortie, le deuxième disque étant mobile par rapport au premier disque, et en configuration desserrée du frein, le deuxième disque est libre en rotation par rapport au premier disque, et en configuration serrée du frein, le deuxième disque est en prise avec le premier disque de manière à empêcher la rotation de l'arbre de sortie par rapport au carter,
- l'arbre d'entrée est monté rotatif par rapport au carter selon un premier axe de rotation et l'arbre de sortie monté rotatif par rapport au carter selon un deuxième axe de rotation confondu avec le premier axe de rotation.

L'invention se rapporte également à un système hypersustentateur pour aéronef, comprenant :
- un premier volet hypersustentateur,
- un deuxième volet hypersustentateur, et
- un dispositif de transmission tel que défini précédemment, dans lequel l'arbre d'entrée est relié au premier volet et l'arbre de sortie est relié au deuxième volet.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique, en coupe longitudinale, un dispositif de transmission conforme à un mode de réalisation possible de l'invention,
- la figure 2 représente de manière schématique, en coupe transversale, un détail d'un premier ensemble d'accouplement du dispositif de la figure 1,
- la figure 3 représente de manière schématique, en coupe transversale, un détail d'un deuxième ensemble d'accouplement du dispositif de la figure 1,
- la figure 4 représente de manière schématique un premier chemin d'effort, lorsque le couple d'entrée s'exerçant sur l'arbre d'entrée du dispositif de transmission est inférieur à un seuil limite de couple,
- la figure 5 représente de manière schématique un deuxième chemin d'effort lorsque le couple d'entrée s'exerçant sur l'arbre d'entrée du dispositif de transmission est supérieur au seuil limite de couple,
- la figure 6 représente de manière schématique une courbe caractéristique du dispositif de transmission représentant le couple de sortie transmis à l'arbre de sortie en fonction du couple d'entrée s'exerçant sur l'arbre d'entrée.

### DESCRIPTION DETAILLEE D'UN MODE DE REALISATION

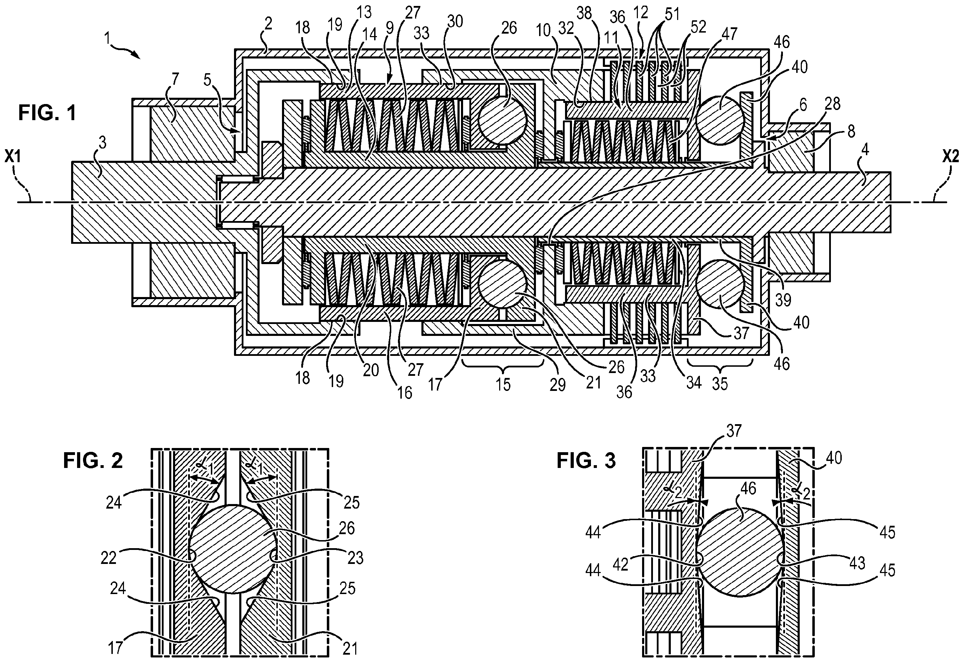

Sur la figure 1, le dispositif de transmission 1 représenté comprend un carter 2, un arbre d'entrée 3 monté rotatif par rapport au carter 2 et un arbre de sortie 4 monté rotatif par rapport au carter 2.

Le carter 2 présente une forme générale cylindrique. Le carter 2 comprend une première ouverture 5 à travers laquelle s'étend l'arbre d'entrée 3 et une deuxième ouverture 6 à travers laquelle s'étend l'arbre de sortie 4.

L'arbre d'entrée 3 est monté rotatif par rapport au carter 2 selon un premier axe de rotation X1, par l'intermédiaire d'un premier roulement à billes 7. L'arbre de sortie 4 est monté rotatif par rapport au carter 2 selon un deuxième axe de rotation X2, par l'intermédiaire d'un deuxième roulement à billes 8. Le deuxième axe de rotation X2 est confondu avec le premier axe de rotation X1.

L'arbre d'entrée 3 est par exemple destiné à être relié à un premier volet hypersustentateur d'un aéronef et l'arbre de sortie 4 est par exemple destiné à être relié à un deuxième volet hypersustentateur de l'aéronef.

Le dispositif de transmission 1 est conçu pour transmettre un couple d'entrainement de l'arbre d'entrée 3 à l'arbre de sortie de sortie 4. En fonctionnement normal, le couple reçu par l'arbre d'entrée 3 (appelé « couple d'entrée ») est identique au couple transmis par le dispositif à l'arbre de sortie 4 (appelé « couple de sortie »). Toutefois, lorsque le couple d'entrée est supérieur à un seuil prédéterminé, le dispositif de transmission 1 limite le couple de sortie, de sorte que le couple de sortie est inférieur au couple d'entrée, et bloque l'arbre d'entrée 3 et l'arbre de sortie 4 en position.

A cet effet, le dispositif de transmission 1 comprend un premier ensemble d'accouplement 9, une pièce intermédiaire 10, un deuxième ensemble d'accouplement 11 et un frein 12.

Le premier ensemble d'accouplement 9 comprend une première pièce d'entrée 13, une première pièce de sortie 14 et un premier mécanisme d'accouplement 15 entre la première pièce d'entrée 13 et la première pièce de sortie 14.

La première pièce d'entrée 13 comprend une partie cylindrique tubulaire 16 et une partie d'extrémité formant un premier plateau 17.

La partie cylindrique tubulaire 16 présente des cannelures externes 18 coopérant avec des cannelures internes 19 de l'arbre d'entrée 3. Les cannelures 18 et 19 s'étendent selon une direction parallèle à l'axe de rotation X1 de l'arbre d'entrée 3 (ou à l'axe de rotation X2 de l'arbre de sortie). De cette manière, la première pièce d'entrée 13 peut coulisser par rapport à l'arbre d'entrée 3 selon la direction de l'axe de rotation X1 de l'arbre d'entrée 3, tout en étant fixe en rotation par rapport à l'arbre d'entrée 3.

La première pièce de sortie 14 comprend également une partie cylindrique tubulaire 20 s'étendant autour de l'arbre de sortie 4 et une partie d'extrémité formant un deuxième plateau 21, le deuxième plateau 21 s'étendant en regard de du premier plateau 17. La première pièce de sortie 14 est montée fixe sur l'arbre de sortie 4. De cette manière, la première pièce de sortie 4 est rotative avec l'arbre de sortie 4.

Le premier mécanisme d'accouplement 15 comprend une pluralité de renfoncements 22 formés sur le plateau 17 de la première pièce d'entrée 13 et une pluralité de renfoncements 23 formés sur le plateau 21 de la première pièce de sortie 14.

Comme illustré plus précisément sur la figure 2, chaque renfoncement 22, 23 forme des rampes 24, 25. Les rampes 24, 25 sont inclinées par rapport au plan normal à l'axe de rotation de l'arbre de sortie d'un premier angle α1.

Le premier mécanisme d'accouplement 15 comprend également une pluralité de premières billes 26 disposées entre les plateaux 17 et 21. Chaque première bille 26 est reçue dans un renfoncement 22 du plateau 17 et dans un renfoncement 23 du plateau 21 faisant face au plateau 17.

Le premier mécanisme d'accouplement 15 comprend en outre un premier ressort 27 agencé entre la première pièce d'entrée 13 et la première pièce de sortie 14. Le premier ressort 27 comprend une pluralité de premières rondelles coniques (ou rondelles Belleville). Les premières rondelles s'étendent autour de la partie tubulaire 16 de la première pièce de sortie 14 et à l'intérieur de la partie tubulaire 16 première pièce d'entrée 13. Le premier ressort 27 est disposé de manière à exercer une force de rappel tendant à rapprocher le plateau 17 de la première pièce d'entrée 13 du plateau 21 de la première pièce de sortie 14. De cette manière, le premier ressort 27 maintient les premières billes 26 dans les renfoncements 22 et 23.

Le premier ensemble d'accouplement 9 est configuré de sorte qu'une variation du couple d'entrée s'exerçant sur l'arbre d'entrée 3 a pour effet de faire varier la position de la première pièce d'entrée 13 par rapport à la première pièce de sortie 14.

Plus précisément :
- lorsque le couple d'entrée exercé sur l'arbre d'entrée 3 est nul, la première pièce d'entrée 13 est positionnée par rapport à la première pièce de sortie 14 selon une première position d'accouplement,
- lorsque le couple d'entrée exercé sur l'arbre d'entrée 3 augmente, la première pièce d'entrée 13 tourne par rapport à la première pièce de sortie 14 autour de l'axe X1, la rotation de la première pièce d'entrée 13 par rapport à la première pièce de sortie 14 entrainant concomitamment un déplacement axial de la première pièce d'entrée 13 par rapport à la première pièce de sortie 14 selon l'axe X1, par l'action des premières billes 26 et des rampes 24 et 25,
- lorsque le couple d'entrée est égal à un premier seuil, la première pièce d'entrée 13 est positionnée par rapport à la première pièce de sortie 14 selon une deuxième position d'accouplement.

Le déplacement de la première pièce d'entrée 13 par rapport à la première pièce de sortie 14 dépend du couple d'entrée, de la raideur du premier ressort 27 et de la pente α1 des rampes 24 et 25.

La pièce intermédiaire 10 s'étend autour de l'arbre de sortie 4. La pièce intermédiaire 10 est montée rotative par rapport à l'arbre de sortie 4 par l'intermédiaire d'un palier 28 disposé entre la pièce intermédiaire 10 et l'arbre de sortie 4. Par ailleurs, la pièce intermédiaire 10 est montée rotative par rapport au carter 2.

La pièce intermédiaire 10 comprend une première partie tubulaire 29 présentant des cannelures internes 30 et une deuxième partie tubulaire 31 comprenant des cannelures internes 32. Les cannelures internes 32 s'étendent selon une direction parallèle à l'axe de rotation X1 de l'arbre d'entrée 3 (ou à l'axe de rotation X2 de l'arbre de sortie 4).

Les cannelures internes 30 de la première partie tubulaire 29 coopèrent avec les cannelures externes 33 de la première pièce d'entrée 13 de manière à autoriser une translation de la première pièce d'entrée 13 par rapport à la pièce intermédiaire 10 selon l'axe de rotation X1 tout en interdisant une rotation de la première pièce d'entrée 13 par rapport à la pièce intermédiaire 10.

Le deuxième ensemble d'accouplement 11 comprend une deuxième pièce d'entrée 33, une deuxième pièce de sortie 34 et un deuxième mécanisme d'accouplement 35 entre la deuxième pièce d'entrée 33 et la deuxième pièce de sortie 34.

La deuxième pièce d'entrée 33 comprend une partie cylindrique tubulaire 36 et une partie d'extrémité 37 formant un plateau.

La partie cylindrique tubulaire 36 présente des cannelures externes 38 coopérant avec les cannelures internes 32 de la pièce intermédiaire 10. Les cannelures 38 s'étendent selon une direction parallèle à l'axe de rotation X2 de l'arbre de sortie (ou à l'axe de rotation X1 de l'arbre d'entrée). De cette manière, la deuxième pièce d'entrée 37 peut coulisser par rapport à la pièce intermédiaire 10 (et par rapport à l'arbre de sortie 4) selon la direction de l'axe de rotation X2 de l'arbre de sortie 4, tout en étant rotative avec la pièce intermédiaire 10.

La pièce intermédiaire 10 permet de solidariser en rotation la première pièce d'entrée 13 et la deuxième pièce d'entrée 33, tout en autorisant une translation de l'une par rapport à l'autre selon la direction de l'axe X2.

La deuxième pièce de sortie 34 comprend une partie cylindrique tubulaire 39 s'étendant autour de l'arbre de sortie 4 et une partie d'extrémité 40 formant un deuxième plateau, le deuxième plateau 40 s'étendant en regard du premier plateau 37. La deuxième pièce de sortie 34 est montée fixe sur l'arbre de sortie 4. De cette manière, la deuxième pièce de sortie 34 est rotative avec l'arbre de sortie 4.

Le deuxième mécanisme d'accouplement 35 comprend une pluralité de renfoncements 42 formés sur le plateau 37 de la deuxième pièce d'entrée 33 et une pluralité de renfoncements 43 formés sur le plateau 40 de la deuxième pièce de sortie 34.

Comme illustré plus précisément sur la figure 3, chaque renfoncement 42, 43 forme des rampes 44, 45. Les rampes 44, 45 sont inclinées par rapport au plan normal à l'axe de rotation X2 de l'arbre de sortie 4 d'un deuxième angle α2. Le deuxième angle α2 est inférieur au premier angle α1. Autrement dit, la pente des rampes 44, 45 du deuxième mécanisme d'accouplement 35 est plus faible que la pente des rampes 24, 25 du premier mécanisme d'accouplement 35.

Le deuxième mécanisme d'accouplement 35 comprend également une pluralité de deuxièmes billes 46. Chaque deuxième bille 46 est reçue dans un renfoncement 42 du plateau 37 de la deuxième pièce d'entrée 33 et dans un renfoncement 43 du plateau 40 de la deuxième pièce de sortie 34 situé en face.

Le deuxième mécanisme d'accouplement 35 comprend en outre un deuxième ressort 47 agencé entre la deuxième pièce d'entrée 33 et la deuxième pièce de sortie 34. Le deuxième ressort 47 comprend une pluralité de deuxièmes rondelles coniques (ou rondelles Belleville). Les deuxièmes rondelles s'étendent autour de la deuxième pièce de sortie 34 et à l'intérieur de la deuxième pièce d'entrée 33. Le deuxième ressort 47 est disposé de manière à exercer une force de rappel tendant à rapprocher le plateau 37 de la deuxième pièce d'entrée 33 du plateau 40 de la deuxième pièce de sortie 34. De cette manière, le deuxième ressort 47 maintient les deuxièmes billes 46 dans les renfoncements 42, 43.

Toutefois, le deuxième ressort 47 présente une raideur inférieure à la raideur du premier ressort 27.

Le deuxième ensemble d'accouplement 11 est configuré de sorte qu'une variation du couple s'exerçant sur la deuxième pièce d'entrée 33 a pour effet de faire varier la position de la deuxième pièce d'entrée 33 par rapport à la deuxième pièce de sortie 34.

Plus précisément :
- lorsque le couple exercé sur la deuxième pièce d'entrée 33 est nul, la deuxième pièce d'entrée 33 est positionnée par rapport à la deuxième pièce de sortie 34 selon une première position d'accouplement,
- lorsque le couple exercé sur la deuxième pièce d'entrée 33 augmente, la deuxième pièce d'entrée 33 tourne par rapport à la deuxième pièce de sortie 34 autour de l'axe X2, la rotation de la deuxième pièce d'entrée 33 par rapport à la deuxième pièce de sortie 34 entrainant concomitamment un déplacement axial de la deuxième pièce d'entrée 33 par rapport à la deuxième pièce de sortie 34 selon l'axe X2, par l'action des deuxièmes billes 46 et des rampes 44 et 45,
- lorsque le couple exercé sur la deuxième pièce d'entrée 33 est égal à un deuxième seuil, la deuxième pièce d'entrée 33 est positionnée par rapport à la deuxième pièce de sortie 34 selon une deuxième position d'accouplement.

Comme le deuxième ressort 47 présente une raideur inférieure à la raideur du premier ressort 27 et comme la deuxième pente α2 est inférieure à la première pente α2, le deuxième seuil est inférieur au premier seuil.

Plus précisément, le deuxième seuil est choisi de manière à être très inférieur par rapport au premier seuil. Ainsi, le deuxième seuil est considéré comme négligeable vis-à-vis du premier seuil, pour le fonctionnement du dispositif.

Comme la deuxième pièce d'entrée 33 est liée en rotation avec la première pièce d'entrée 13 par le biais de la pièce intermédiaire 10, et que la deuxième pièce de sortie 34 est liée en rotation avec la première pièce de sortie 14 par le biais de l'arbre de sortie 4, une rotation de la première pièce d'entrée 13 par rapport à la première pièce de sortie 14 entraine une rotation correspondante de la deuxième pièce d'entrée 33 par rapport à la deuxième pièce de sortie 34.

Le frein 12 comprend une pluralité de premiers disques 51 montés fixes en rotation par rapport au carter 2, et une pluralité de deuxièmes disques 52 montés fixes en rotation par rapport à la deuxième pièce de sortie 34. Les premiers disques 51 et les deuxièmes disques 52 sont disposés en alternance, les premiers disques 51 étant interposés entre les deuxièmes disques 52.

Les premiers disques 51 sont mobiles axialement par rapport aux deuxièmes disques 52 entre une configuration desserrée dans laquelle les deuxièmes disques 52 sont libres en rotation par rapport aux premiers disques 51, et une configuration serrée dans laquelle les deuxièmes disques 52 sont en prise avec les premiers disques 51.

Dans la configuration desserrée, le frein 12 autorise une rotation de l'arbre de sortie 4 par rapport au carter 2, tandis que dans la configuration serrée, le frein 12 empêche la rotation de l'arbre de sortie 4 par rapport au carter 2.

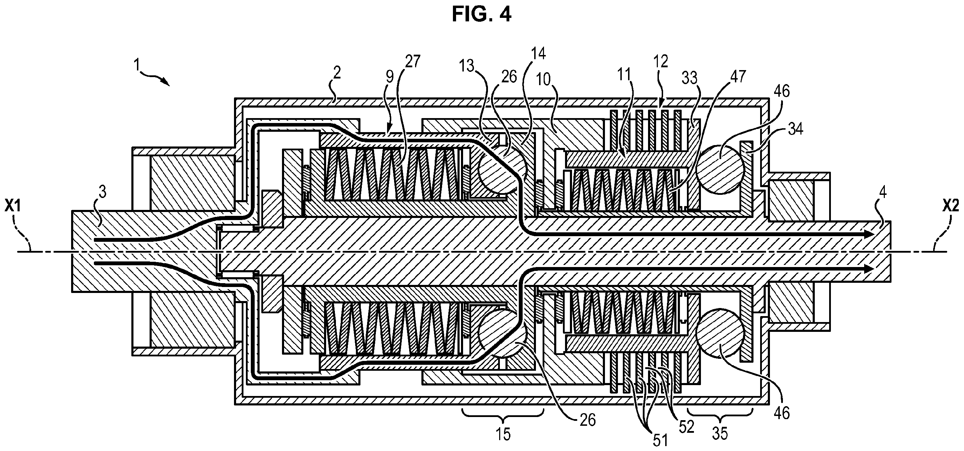

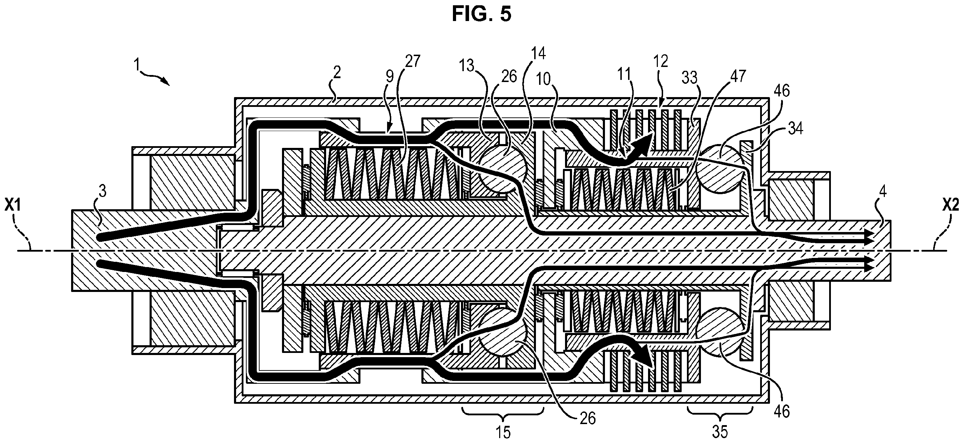

Les figures 4 et 5 montrent le chemin d'effort à travers le dispositif de transmission 1 au cours de son fonctionnement.

Le dispositif de transmission 1 fonctionne de la manière suivante.

Comme illustré sur la figure 4, le frein 12 est initialement en configuration desserrée.

Tant que le couple d'entrée reçu par l'arbre d'entrée 3 est inférieur au premier seuil, le couple d'entrée est entièrement transmis à l'arbre de sortie 4, par l'intermédiaire du premier ensemble d'accouplement 9.

Comme le deuxième seuil est très inférieur au premier seuil, le couple transmis par le deuxième ensemble d'accouplement peut être négligé, et il peut être considéré que la totalité du couple d'entrée est transmis par le premier ensemble d'accouplement 9 à l'arbre de sortie 4.

Si le couple d'entrée reçu par l'arbre d'entrée 3 augmente, la force de rappel exercée par le premier ressort 27 augmente de manière à maintenir un équilibre des forces exercées sur les premières billes 26.

Lorsque la force de rappel exercée par le premier ressort 27 augmente, la longueur du premier ressort 27 diminue, ce qui a pour effet que les premières billes 26 sortent des renfoncements 22 et 23 et se déplacent le long des premières rampes 24 et 25. Le déplacement des premières billes 26 a pour effet de déplacer axialement la première pièce d'entrée 13 par rapport à la première pièce de sortie 14 (en écartant les plateaux 17 et 21 l'un par rapport à l'autre), à l'encontre de la force de rappel exercée par le premier ressort 27. Le déplacement des premières billes 26 a également pour effet de déplacer angulairement la première pièce d'entrée 13 par rapport à la première pièce de sortie 14 autour de l'axe de rotation X1.

Comme la deuxième pièce d'entrée 33 est solidaire en rotation de la première pièce d'entrée 14, par le biais de la pièce intermédiaire 10, le même déplacement angulaire se produit entre la deuxième pièce d'entrée 33 et la deuxième pièce de sortie 34. Le déplacement angulaire de la deuxième pièce d'entrée 33 par rapport à la deuxième pièce de sortie 34 a pour effet que les deuxièmes billes 46 sortent des renfoncements 42 et 43 et se déplacent le long des deuxièmes rampes 44 et 45. Le déplacement des deuxièmes billes 47 a pour effet de déplacer axialement la deuxième pièce d'entrée 33 par rapport à la deuxième pièce de sortie 34 (en écartant des plateaux 37 et 40 l'un par rapport à l'autre), à l'encontre de la force de rappel exercée par le deuxième ressort 47.

Le déplacement axial selon l'axe X2 de la deuxième pièce d'entrée 33 par rapport à la deuxième pièce de sortie 34 est limitée par l'épaisseur des disques 51 et 52 du frein 12. Lorsque les disques 51 et 52 du frein sont serrés les uns contre les autres, la deuxième pièce d'entrée 33 ne peut plus se déplacer angulairement par rapport à la deuxième pièce de sortie 34, et par conséquent, la première pièce d'entrée 13 ne peut plus se déplacer angulairement par rapport à la première pièce de sortie 14. Par conséquent, première pièce d'entrée 13 ne peut plus se déplacer axialement par rapport à la première pièce de sortie 14 selon l'axe X1.

Dans cette configuration, le couple d'entrée à atteint le premier seuil. Le frein 12 est en configuration serrée et empêche la rotation de l'arbre de sortie 4 par rapport au carter 2. Par voie de conséquence, le frein empêche également la rotation de l'arbre d'entrée 3.

Comme illustré sur la figure 5, si le couple d'entrée augmente encore, le couple est converti par le deuxième ensemble d'accouplement 11 en une force de serrage tendant à presser les disques 51 et 52 les uns contre les autres. Comme la pente α2 des deuxièmes rampes 44 et 45 est faible et que la raideur du deuxième ressort 47 est faible, la force de serrage transmise aux disques 51 et 52 est très élevée, de sorte que le couple de serrage est également très élevé.

Dans cette configuration, le couple d'entrée est égal à la somme du couple de sortie et du couple de serrage.

Si le couple de sortie diminue à nouveau, le couple d'entrée est égal à la somme du couple de sortie et du couple de serrage, tant que le couple d'entrée reste supérieur au premier seuil.

Toutefois, à mesure que le couple d'entrée diminue, la force de serrage subie par les disques 51 et 52 du frein 12 diminue également.

Lorsque le couple de sortie atteint la première valeur seuil, le couple de serrage devient nul.

Si le couple d'entrée continue de diminuer, la force de rappel exercée par le deuxième ressort 47 tend à diminuer de manière maintenir l'équilibre des forces s'exerçant sur les deuxièmes billes 46. La longueur du deuxième ressort 47 augmente, ce qui a pour effet de desserrer les disques 51 et 52 du frein 12. Le frein 12 passe de la configuration serrée à la configuration desserrée.

Dès lors, le couple d'entrée est à nouveau égal au couple de sortie.

Les premières billes 26 et les deuxièmes billes 46 redescendent les rampes 24, 25 et 44, 45 et retournent dans les renfoncements 22, 23 et 42, 43. Le dispositif de transmission 1 retourne dans son état initial.

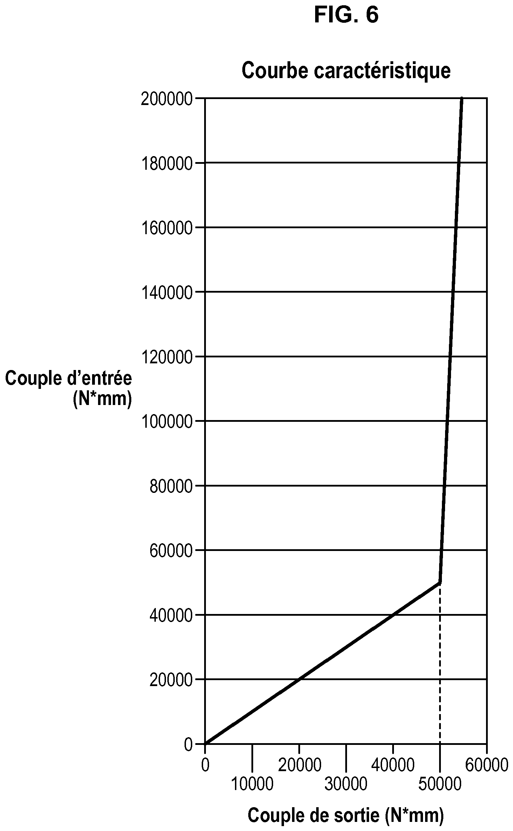

La figure 6 représente de manière schématique un exemple de courbe caractéristique du dispositif de transmission 1, représentant le couple de sortie en fonction du couple d'entrée.

Dans une première plage comprise entre 0 Newton·millimètre et le premier seuil (égal par exemple 50 000 Newtons-millimètres - soit 50 Newtons·mètres), le frein 12 est en configuration desserrée et le couple d'entrée est égal au couple de sortie.

Dans une deuxième plage dans laquelle le couple d'entrée est supérieur au premier seuil, le frein 12 est en configuration serrée et le couple de sortie augmente très peu par rapport au couple d'entrée (par exemple, le couple de sortie reste inférieur à 55 000 Newtonsmillimètres - soit 55 Newtons·mètres - alors que le couple d'entrée peut atteindre 200 000 Newtons·millimètres - soit 220 Newtons·mètres).

Le dispositif de transmission 1 permet ainsi de limiter le couple de sortie, même en cas d'augmentation forte du couple d'entrée.

De plus, grâce aux deux ensembles d'accouplement 9 et 11 agissant en parallèle, le dispositif de transmission 1 proposé est réversible.

## Revendications

1. Dispositif de transmission (1), comprenant :
- un carter (2),
- un arbre d'entrée (3) monté rotatif par rapport au carter (2),
- un arbre de sortie (4) monté rotatif par rapport au carter (2),
- un frein (12) entre le carter (2) et l'arbre de sortie (4), le frein (12) étant mobile entre une configuration desserrée dans laquelle le frein (12) autorise la rotation de l'arbre de sortie (4) par rapport au carter (2) et une configuration serrée dans laquelle le frein (12) empêche la rotation de l'arbre de sortie (4) par rapport au carter (2),
- un premier ensemble d'accouplement (9) comprenant une première pièce d'entrée (13) solidaire en rotation de l'arbre d'entrée (3), une première pièce de sortie (14) solidaire en rotation de l'arbre de sortie (4), et un premier mécanisme d'accouplement (15) entre la première pièce d'entrée (13) et la première pièce de sortie (14), le premier mécanisme d'accouplement (15) étant configuré pour déplacer la première pièce d'entrée (13) par rapport à la première pièce de sortie (14) entre une première position d'accouplement lorsque le couple transmis entre la première pièce d'entrée (13) et la première pièce de sortie (14) est inférieur à un premier seuil, et une deuxième position d'accouplement lorsque le couple transmis est supérieur au premier seuil, **caractérisé par**
- un deuxième ensemble d'accouplement (11) comprenant une deuxième pièce d'entrée (33) solidaire en rotation de la première pièce d'entrée (13) et une deuxième pièce de sortie (34) solidaire en rotation de l'arbre de sortie (4), et un deuxième mécanisme d'accouplement (35) entre la deuxième pièce d'entrée (33) et la deuxième pièce de sortie (34), le deuxième mécanisme d'accouplement (35) étant configuré pour déplacer la deuxième pièce d'entrée (33) par rapport à la deuxième pièce de sortie (34) entre une première position d'accouplement lorsque le couple transmis entre la deuxième pièce d'entrée et la deuxième pièce de sortie est inférieur à un deuxième seuil, le deuxième seuil étant inférieur au premier seuil, et une deuxième position lorsque le couple transmis est supérieur au deuxième seuil,
dans lequel le déplacement de la deuxième pièce d'entrée (33) par rapport à la deuxième pièce de sortie (34) vers la deuxième position provoque un déplacement du frein (12) vers la configuration serrée.

2. Dispositif selon la revendication 1, comprenant une pièce intermédiaire (10) par laquelle la deuxième pièce d'entrée (33) est raccordée à la première pièce d'entrée (13).

3. Dispositif selon l'une des revendications 1 et 2, dans lequel la première pièce d'entrée (13) est mobile en translation par rapport à la première pièce de sortie (14) entre la première position et la deuxième position.

4. Dispositif selon l'une des revendications 1 à 3, dans lequel la deuxième pièce d'entrée (33) est mobile en translation par rapport à la deuxième pièce de sortie (34) entre la première position et la deuxième position.

5. Dispositif selon l'une des revendications 1 à 4, dans lequel le premier mécanisme d'accouplement (15) comprend un premier organe élastique de rappel (27) propre à solliciter la première pièce d'entrée (13) vers première position.

6. Dispositif selon l'une des revendications 1 à 5, dans lequel le deuxième mécanisme d'accouplement (35) comprend un deuxième organe élastique de rappel (47) propre à solliciter la deuxième pièce d'entrée (33) vers première position.

7. Dispositif selon les revendications 5 et 6, dans lequel le premier organe élastique de rappel (27) présente une première raideur et le deuxième organe élastique de rappel (47) présente une deuxième raideur, inférieure à la première raideur.

8. Dispositif selon l'une des revendications 1 à 7, dans lequel la première pièce d'entrée (13) et/ou la première pièce de sortie (14) comprennent une première rampe (24, 25) propre à convertir une rotation de la première pièce d'entrée (13) par rapport à la première pièce de sortie (14) en une translation de la première pièce d'entrée (13) par rapport à la première pièce de sortie (14) entre la première position et la deuxième position.

9. Dispositif selon l'une des revendications 1 à 8, dans lequel la deuxième pièce d'entrée (33) et/ou la deuxième pièce de sortie (34) comprennent une deuxième rampe (44, 45) propre à convertir une rotation de la deuxième pièce d'entrée (33) par rapport à la deuxième pièce de sortie (34) en une translation de la deuxième pièce d'entrée (33) par rapport à la deuxième pièce de sortie (34) entre la première position et la deuxième position.

10. Dispositif selon les revendications 8 et 9, dans lequel la première rampe (24, 25) présente un premier angle d'inclinaison (α1) par rapport à un plan normal à l'axe de rotation (X2) de l'arbre de sortie (4), et la deuxième rampe (44, 45) présente un deuxième angle d'inclinaison (a2) par rapport au plan normal à l'axe de rotation (X2), le deuxième angle d'inclinaison étant inférieur au premier angle d'inclinaison.

11. Dispositif selon l'une des revendications 1 à 10, dans lequel le premier mécanisme d'accouplement (15) comprend des premières billes (26) interposées entre la première pièce de sortie (14) et la première pièce d'entrée (13).

12. Dispositif selon l'une des revendications 1 à 11, dans lequel le deuxième ensemble d'accouplement (35) comprend des deuxièmes billes (46) interposées entre la deuxième pièce de sortie (34) et la deuxième pièce d'entrée (33).

13. Dispositif selon l'une des revendications 1 à 12, dans lequel le frein (12) comprend un premier disque (51) monté fixe en rotation par rapport au carter (12) et un deuxième disque (52) monté fixe en rotation par rapport à l'arbre de sortie (4), le deuxième disque (52) étant mobile par rapport au premier disque (51), et dans lequel en configuration desserrée du frein (12), le deuxième disque (52) est libre en rotation par rapport au premier disque (51), et en configuration serrée du frein (12), le deuxième disque (52) est en prise avec le premier disque (51) de manière à empêcher la rotation de l'arbre de sortie (4) par rapport au carter (2).

14. Dispositif selon l'une des revendications 1 à 13, dans lequel l'arbre d'entrée (3) est monté rotatif par rapport au carter (2) selon un premier axe de rotation (X1) et l'arbre de sortie (4) est monté rotatif par rapport au carter (2) selon un deuxième axe de rotation (X2) confondu avec le premier axe de rotation (X1).

15. Système hypersustentateur pour aéronef, comprenant :
- un premier volet hypersustentateur,
- un deuxième volet hypersustentateur, et
- un dispositif de transmission (1) conforme à l'une des revendications 1 à 14, dans lequel l'arbre d'entrée (3) est relié au premier volet et l'arbre de sortie (4) est relié au deuxième volet.

## Patentansprüche

1. Übertragungsmechanismus (1), umfassend:
- ein Gehäuse (2),
- eine Antriebswelle (3), die in Bezug zu dem Gehäuse (2) drehbar gelagert ist,
- eine Abtriebswelle (4), die in Bezug zu dem Gehäuse (2) drehbar gelagert ist,
- eine Bremse (12) zwischen dem Gehäuse (2) und der Abtriebswelle (4), wobei die Bremse (12) zwischen einer gelösten Ausgestaltung, in der die Bremse (12) die Drehung der Abtriebswelle (4) in Bezug zu dem Gehäuse (2) zulässt, und einer angezogenen Ausgestaltung beweglich ist, in der die Bremse (12) die Drehung der Abtriebswelle (4) in Bezug zu dem Gehäuse (2) verhindert,
- eine erste Kopplungsbaugruppe (9), die ein erstes Antriebsteil (13), das drehfest mit der Antriebswelle (3) verbunden ist, ein erstes Abtriebsteil (14), das drehfest mit der Abtriebswelle (4) verbunden ist, und einen ersten Kopplungsmechanismus (15) zwischen dem ersten Antriebsteil (13) und dem ersten Abtriebsteil (14) umfasst, wobei der erste Kopplungsmechanismus (15) ausgestaltet ist, um das erste Antriebsteil (13) in Bezug auf das erste Abtriebsteil (14) zwischen einer ersten Kopplungsposition, wenn das Drehmoment, das zwischen dem ersten Antriebsteil (13) und dem ersten Abtriebsteil (14) übertragen wird, kleiner als ein erster Schwellenwert ist, und einer zweiten Kopplungsposition zu verlagern, wenn das übertragene Drehmoment höher als der erste Schwellenwert ist, **gekennzeichnet durch**:
- eine zweite Kopplungsbaugruppe (11), die ein zweites Antriebsteil (33), das drehfest mit dem ersten Antriebsteil (13) verbunden ist, und ein zweites Abtriebsteil (34), das drehfest mit der Abtriebswelle (4) verbunden ist, und einen zweiten Kopplungsmechanismus (35) zwischen dem zweiten Antriebsteil (33) und dem zweiten Abtriebsteil (34) umfasst, wobei der zweite Kopplungsmechanismus (35) ausgestaltet ist, um das zweite Antriebsteil (33) in Bezug auf das zweite Abtriebsteil (34) zwischen einer ersten Kopplungsposition, wenn das zwischen dem zweiten Antriebsteil und dem zweiten Abtriebsteil übertragene Drehmoment niedriger als ein zweiter Schwellenwert ist, wobei der zweite Schwellenwert niedriger als der erste Schwellenwert ist, und einer zweiten Position zu verlagern, wenn das übertragene Drehmoment höher als der zweite Schwellenwert ist,
wobei die Verlagerung von dem zweiten Antriebsteil (33) in Bezug auf das zweite Abtriebsteil (34) in Richtung der zweiten Position die Verlagerung der Bremse (12) in Richtung der angezogenen Ausgestaltung bewirkt.

2. Vorrichtung nach Anspruch 1, die ein Zwischenteil (10) umfasst, über das das zweite Antriebsteil (33) an das erste Antriebsteil (13) angeschlossen ist.

3. Vorrichtung nach einem der Ansprüche 1 und 2, wobei das erste Antriebsteil (13) in Bezug auf das erste Abtriebsteil (14) zwischen der ersten Position und der zweiten Position translatorisch beweglich ist.

4. Vorrichtung nach einem der Ansprüche 1 bis 3, wobei das zweite Antriebsteil (33) in Bezug auf das zweite Abtriebsteil (34) zwischen der ersten Position und der zweiten Position translatorisch beweglich ist.

5. Vorrichtung nach einem der Ansprüche 1 bis 4, wobei der erste Kopplungsmechanismus (15) ein erstes elastisches Rückstellungsorgan (27) umfasst, das geeignet ist, das erste Antriebsteil (13) in Richtung der ersten Position zu ziehen.

6. Vorrichtung nach einem der Ansprüche 1 bis 5, wobei der zweite Kopplungsmechanismus (35) ein zweites elastisches Rückstellungsorgan (47) umfasst, das geeignet ist, das zweite Antriebsteil (33) in Richtung der ersten Position zu ziehen.

7. Vorrichtung nach Anspruch 5 und 6, wobei das erste elastische Rückstellungsorgan (27) eine erste Steifigkeit aufweist und das zweite elastische Rückstellungsorgan (47) eine zweite Steifigkeit aufweist, die kleiner als die erste Steifigkeit ist.

8. Vorrichtung nach einem der Ansprüche 1 bis 7, wobei das erste Antriebsorgan (13) und/oder das erste Abtriebsorgan (14) eine erste Rampe (24, 25) umfasst/umfassen, die geeignet ist, eine Drehung des ersten Antriebsteils (13) in Bezug auf das erste Abtriebsteil (14) in eine Translation des ersten Antriebsteils (13) in Bezug auf das erste Abtriebsteil (14) zwischen der ersten Position und der zweiten Position umzuwandeln.

9. Vorrichtung nach einem der Ansprüche 1 bis 8, wobei das zweite Antriebsteil (33) und/oder das zweite Abtriebsteil (34) eine zweite Rampe (44, 45) umfasst/umfassen, die geeignet ist, eine Drehung des zweiten Antriebsteils (33) in Bezug auf das zweite Abtriebsteil (34) in eine Translation des zweiten Antriebsteils (33) in Bezug auf das zweite Abtriebsteil (34) zwischen der ersten Position und der zweiten Position umzuwandeln.

10. Vorrichtung nach Anspruch 8 und 9, wobei die erste Rampe (24, 25) einen ersten Neigungswinkel (α1) in Bezug auf eine Ebene normal zur Drehachse (X2) der Abtriebswelle (4) aufweist und die zweite Rampe (44, 45) einen zweiten Neigungswinkel (α2) in Bezug auf die Ebene normal zur Drehachse (X2) aufweist, wobei der zweite Neigungswinkel kleiner ist als der erste Neigungswinkel.

11. Vorrichtung nach einem der Ansprüche 1 bis 10, wobei der erste Kopplungsmechanismus (15) erste Kugeln (26) umfasst, die zwischen dem ersten Abtriebsteil (14) und dem ersten Antriebsteil (13) zwischengelegt sind.

12. Vorrichtung nach einem der Ansprüche 1 bis 11, wobei die zweite Kopplungsbaugruppe (35) zweite Kugeln (46) umfasst, die zwischen dem zweiten Abtriebsteil (34) und dem zweiten Antriebsteil (33) zwischengelegt sind.

13. Vorrichtung nach einem der Ansprüche 1 bis 12, wobei die Bremse (12) eine erste Scheibe (51), die drehfest in Bezug auf das Gehäuse (12) gelagert ist, und eine zweite Scheibe (52) umfasst, die drehfest in Bezug auf die Abtriebswelle (4) gelagert ist, wobei die zweite Scheibe (52) in Bezug auf die erste Scheibe (51) drehbar gelagert ist und wobei in der gelösten Ausgestaltung der Bremse (12) die zweite Scheibe (52) frei in Bezug auf die erste Scheibe (51) drehbar ist, und in der angezogenen Ausgestaltung der Bremse (12) die zweite Scheibe (52) derart mit der ersten Scheibe (51) in Eingriff ist, dass die Drehung der Abtriebswelle (4) in Bezug auf das Gehäuse (2) verhindert wird.

14. Vorrichtung nach einem der Ansprüche 1 bis 13, wobei die Antriebswelle (3) entlang einer ersten Drehachse (X1) drehbar in Bezug auf das Gehäuse (2) gelagert ist und die Abtriebswelle (4) entlang einer zweiten Drehachse (X2), die mit der ersten Drehachse (X1) zusammenfällt, drehbar in Bezug auf das Gehäuse (2) gelagert ist.

15. Auftriebserhöhungssystem für Luftfahrzeuge, umfassend:
- eine erste auftriebserhöhende Klappe,
- eine zweite auftriebserhöhende Klappe und
- eine Übertragungsvorrichtung (1) nach einem der Ansprüche 1 bis 14, wobei die Antriebswelle (3) mit der ersten Klappe verbunden ist und die Abtriebswelle (4) mit der zweiten Klappe verbunden ist.

## Claims

1. A transmission device (1), comprising:
- a casing (2),
- an input shaft (3) rotatably mounted with respect to the casing (2),
- an output shaft (4) rotatably mounted with respect to the casing (2),
- a brake (12) between the casing (2) and the output shaft (4), the brake (12) being movable between a disengaged configuration in which the brake (12) allows rotation of the output shaft (4) with respect to the casing (2) and a engaged configuration in which the brake (12) prevents rotation of the output shaft (4) with respect to the casing (2),
- a first coupling assembly (9) comprising a first input part (13) secured in rotation to the input shaft (3), a first output part (14) secured in rotation to the output shaft (4), and a first coupling mechanism (15) between the first input part (13) and the first output part (14), the first coupling mechanism (15) being configured to move the first input part (13) with respect to the first output part (14) between a first coupling position when the torque transmitted between the first input part (13) and the first output part (14) is lower than a first threshold, and a second coupling position when the transmitted torque is greater than the first threshold, **characterized by**
- a second coupling assembly (11) comprising a second input part (33) secured in rotation to the first input part (13) and a second output part (34) secured in rotation to the output shaft (4), and a second coupling mechanism (35) between the second input part (33) and the second output part (34), the second coupling mechanism (35) being configured to move the second input part (33) with respect to the second output part (34) between a first coupling position when the transmitted torque between the second input part and the second output part is lower than a second threshold, the second threshold being lower than the first threshold, and a second position when the transmitted torque is greater than the second threshold,
wherein the movement of the second input part (33) with respect to the second output part (34) towards the second position causes movement of the brake (12) towards the engaged configuration.

2. The device according to claim 1, comprising an intermediate part (10) by which the second input part (33) is connected to the first input part (13).

3. The device according to any of claims 1 and 2, wherein the first input part (13) is movable in translation with respect to the first output part (14) between the first position and the second position.

4. The device according to any of claims 1 to 3, wherein the second input part (33) is movable in translation with respect to the second output part (34) between the first position and the second position.

5. The device according to any of claims 1 to 4, wherein the first coupling mechanism (15) comprises a first elastic return member (27) adapted to urge the first input part (13) towards the first position.

6. The device according to any of claims 1 to 5, wherein the second coupling mechanism (35) comprises a second elastic return member (47) adapted to urge the second input part (33) towards the first position.

7. The device according to claims 5 and 6, wherein the first elastic return member (27) has a first stiffness and the second elastic return member (47) has a second stiffness, lower than the first stiffness.

8. The device according to any of claims 1 to 7, wherein the first input part (13) and/or the first output part (14) comprise a first ramp (24, 25) adapted to convert a rotation of the first input part (13) with respect to the first output part (14) into a translation of the first input part (13) with respect to the first output part (14) between the first position and the second position.

9. The device according to any of claims 1 to 8, wherein the second input part (33) and/or the second output part (34) comprise a second ramp (44, 45) adapted to convert a rotation of the second input part (33) with respect to the second output part (34) into a translation of the second input part (33) with respect to the second output part (34) between the first position and the second position.

10. The device according to claims 8 and 9, wherein the first ramp (24, 25) has a first angle of inclination (α1) with respect to a plane normal to the axis of rotation (X2) of the output shaft (4), and the second ramp (44, 45) has a second angle of inclination (α2) with respect to the plane normal to the axis of rotation (X2), the second angle of inclination being smaller than the first angle of inclination.

11. The device according to any of claims 1 to 10, wherein the first coupling mechanism (15) comprises first balls (26) interposed between the first output part (14) and the first input part (13).

12. The device according to any of claims 1 to 11, wherein the second coupling assembly (35) comprises second balls (46) interposed between the second output part (34) and the second input part (33).

13. The device according to any of claims 1 to 12, wherein the brake (12) comprises a first disk (51) mounted fixed in rotation with respect to the casing (12) and a second disk (52) mounted fixed in rotation with respect to the output shaft (4), the second disk (52) being movable with respect to the first disk (51), and wherein in the disengaged configuration of the brake (12), the second disk (52) is free in rotation with respect to the first disk (51), and in the engaged configuration of the brake (12), the second disk (52) is engaged with the first disk (51) so as to prevent rotation of the output shaft (4) with respect to the casing (2).

14. The device according to any of claims 1 to 13, wherein the input shaft (3) is rotatably mounted with respect to the casing (2) along a first axis of rotation (X1) and the output shaft (4) is rotatably mounted with respect to the casing (2) along a second axis of rotation (X2) coincident with the first axis of rotation (X1).

15. A high lift system for an aircraft, comprising:
- a first high lift flap,
- a second high lift flap, and
- a transmission device (1) according to any of claims 1 to 14, wherein the input shaft (3) is connected to the first flap and the output shaft (4) is connected to the second flap.
